# EUROPEAN PATENT SPECIFICATION

(11) **EP 3 093 860 B1**
(45) Date of publication and mention of the grant of the patent: **16.12.2020**
(21) Application number: 15167130.2
(22) Date of filing: 11.05.2015
(51) Int. Cl.: H01G 9/00, H01G 2/08

(54) **CAPACITOR BLOCK AND METHOD FOR TRANSFERRING HEAT FROM A CAPACITOR BLOCK**
KONDENSATORBLOCK UND VERFAHREN ZUR WÄRMEABLEITUNG AUS EINEM KONDENSATORBLOCK
BLOC DE CONDENSATEURS ET PROCÉDÉ DE TRANSFERT DE CHALEUR À PARTIR D'UN BLOC DE CONDENSATEURS

(43) Date of publication of application: 16.11.2016
(73) Proprietor: ABB Schweiz AG, 5400 Baden (CH)
(72) Inventor: Björkman, Niko, 00381 Helsinki (FI); Seväkivi, Pertti, 00381 Helsinki (FI); Tervo, Hermanni, 00381 Helsinki (FI)
(74) Representative: Laine IP Oy

(56) References cited:
- AT-U1- 9 922
- AT-U1- 9 922
- DE-A1- 10 153 513
- GB-A- 296 640
- US-A1- 2012 262 877

## Description

### FIELD

The present invention relates to a capacitor block comprising a plurality of electrolytic capacitors. Further, the present invention relates to a method for transferring heat from capacitors of a capacitor block.

### BACKGROUND

A long recognized problem in the design of electrolytic capacitors is heat buildup which occurs during its operation and shortens the capacitor life time. When loading the capacitor with alternating current, heat occurs and is dissipated in the capacitor winding and to the environment by way of the housing. The heat causes overheating of the capacitor winding and reduces the useful life time of the device. High temperatures cause the impregnant to become chemically unstable, and the high temperature condition also has a deleterious effect on the dielectric which can cause a dielectric failure.

Different systems are known, by means of which the temperature of an electrolytic capacitor can be reduced. For example, document US 5,021,927 describes a cooling system for an electrical wound electrolyte capacitor wherein the capacitor winding is mounted in a metallic cylindrical-shape housing and the winding has electric foils which project from both ends with one of the foils being in thermic contact with the floor of the housing and the other foil being in thermal contact with a metallic plate. A terminal contact which is preferably threaded on its outer surface is mounted on the floor and a cooling plate can be secured to the terminal contact. Heat conduction is most effective through the bottom of an electrolytic capacitor. According to this solution, only a part of the base of the capacitor can be in contact with the cooling plate due to the terminal contact.

Further, document EP 0780855 A1 discloses an electrolytic capacitor comprising a pipe or a cooling duct that travels through the capacitor in the middle of the capacitive element. A cooling medium, such as air, can be made to flow through the pipe. Since the pipe is not insulated from the electrolytic capacitor, the cooling medium cannot be liquid. Another problem with the arrangement is that since the pipe travels through the entire electrolytic capacitor, the structure of the capacitor cover must be changed due to the opening to be provided for the pipe in the cover. Furthermore, document DE 10153513 A1 discloses an arrangement comprising a cooler and a capacitor holder. The cooler has a coolant hose with a feed and an outlet mounted inside an enclosure. For each capacitor along the hose the enclosure has apertures whose diameter exceeds that of the capacitor and the holder is joined to the enclosure via spacers so that each capacitor protrudes through an aperture into the enclosure. Yet further, document US 2012/0262877 A1 describes a power converting apparatus including a housing, a cylindrical capacitor, and a cylindrical capacitor cover. The housing includes a housing base, a main body, and an air duct. The main body includes a plurality of electronic components on a first surface of the housing base. The air duct is disposed on a second surface of the housing base. The capacitor penetrates through the housing base so that a part of the capacitor is disposed in the main body while a rest part of the capacitor is disposed in the air duct. The capacitor cover is disposed on the housing base and covers the rest part of the capacitor. The capacitor cover includes an elastic material and an inner surface. The capacitor cover includes a groove disposed on the inner surface in an axial direction of the capacitor cover.

Additionally, document US 2004/0130855 A1 discloses a method for cooling an electrolytic capacitor comprising a casing that surrounds a capacitive element, and to an electrolytic capacitor. The casing is provided with a hollow, and a cooling element made of an electrically insulating material is placed in the hollow, the cooling element comprising at least one duct, which can be arranged to receive a cooling medium. Since the cooling element placed in the hollow is made of an electrically insulating material, the cooling medium can be liquid, such as water.

A plurality of electrolytic capacitors is often arranged in a capacitor block. In this case, a cooling system for a group of capacitors may be required instead or in addition to an independent heat transfer system of a respective capacitor. For example, document US 2011/0032674 A1 describes a power conversion apparatus including a casing and an inverter unit housed in the casing. The inverter unit includes a unit case, a capacitor block removably provided at a position on an inner side of a detachable side plate of the unit case, and a fan block placed in the unit case. The capacitor block includes a capacitor case having a plurality of capacitor insertion holes, a plurality of electrolytic capacitors placed in the capacitor insertion holes, respectively, and a laminated bus bar connected to the electrolytic capacitors. The fan block includes a fan case and a cooling fan provided in the fan case. A problem with the arrangement is that the number of insertion holes in the capacitor case is to be defined when designing the capacitor block. Extending the capacitor block at a later stage cannot be done.

In view of the foregoing, it would be beneficial to provide a capacitor block which includes a system for transferring heat from the electrolytic capacitors and is easily extendable in order to vary the number of capacitors of the capacitor block.

### SUMMARY OF THE INVENTION

The invention is defined by the features of the independent claims. Some specific embodiments are defined in the dependent claims.
According to a first aspect of the present invention, there is provided a capacitor block as defined in claim 1.

According to a second aspect of the present invention, there is provided a method for transferring heat from capacitors of a capacitor block, the method being as defined in claim 10.

Considerable advantages are obtained by means of the embodiments of the present invention. A capacitor block comprising a system for cooling a plurality of electrolytic capacitors of the capacitor block is provided by certain embodiments of the invention. Heat conduction is most effective through the bottom of an electrolytic capacitor and 100 % of the bases of the capacitors can be used for heat transfer according to certain embodiments of the invention. The mass flow of the cooling gas can be controlled in order to effectively achieve a predefined capacitor temperature. The capacitor's life time can be increased by means of appropriately controlling the capacitor temperature. Tests have shown that the hotspot temperature of the capacitor can be decreased by about 7 [°C] - 10 [°C]. Therefore, the lifetime of the capacitors can be doubled according to certain embodiments, thus reducing investment costs. Certain embodiments also provide the ability to receive about 25 % more current load without having undesired elevation of temperature. Therefore, the number of capacitors in capacitor blocks can be reduced due to controlling temperature, thus reducing investment costs further. Nylon nuts for attaching the capacitors to cooling plates are not required.

Further, the capacitor block according to certain embodiments of the invention can be easily extended by using additional spacers and wall elements in order to provide additional capacitors in a capacitor holder. The capacitor block can be extended such that the number of rows and/or the number of capacitors in each row are increased. The structure of the capacitor block is such that a fluid channel is formed for each row of capacitors in order to effectively transfer heat away from the bases of the capacitors.

The capacitor block according to certain embodiments of the invention is furthermore easy to install and de-install. The capacitor block can be manufactured cost efficiently in industrial scale. The packaging density can be improved, since outer walls of adjacent capacitors can be arranged very close to each other. The structure of the capacitor block according to certain embodiments of the invention can be therefore highly compact. Additionally, the weight of the capacitor block can be reduced due to materials used for the capacitor holder.

### BRIEF DESCRIPTION OF THE DRAWINGS

FIGURE 1 illustrates a schematic cross sectional view of an electrolytic capacitor,
FIGURE 2 illustrates a schematic perspective view of a capacitor block in accordance with at least some embodiments of the present invention,
FIGURE 3 illustrates a schematic exploded view of a capacitor block in accordance with at least some embodiments of the present invention,
FIGURE 4 illustrates a schematic side view of an electrolytic capacitor of a capacitor block in accordance with at least some embodiments of the present invention,
FIGURE 5 illustrates a schematic cross sectional view of a portion of a capacitor block in accordance with at least some embodiments of the present invention,
FIGURE 6 illustrates a schematic side view of a capacitor block in accordance with at least some embodiments of the present invention,
FIGURE 7 illustrates a schematic top view of a capacitor block in accordance with at least some embodiments of the present invention,
FIGURE 8 illustrates an image of a computerized simulation of a fluid flow in fluid channels of a capacitor block in accordance with at least some embodiments of the present invention,
FIGURE 9 illustrates a schematic perspective view of a capacitor block in accordance with at least some embodiments of the present invention,
FIGURE 10 illustrates a schematic exploded view of a capacitor block in accordance with at least some embodiments of the present invention,
FIGURE 11 illustrates a schematic cross sectional view of a mounting sequence of a capacitor and a common cooling system of a capacitor, and
FIGURE 12 illustrates a schematic side view of a mounting sequence of capacitors and a cooling system of a capacitor block in accordance with at least some embodiments of the present invention.

### EMBODIMENTS

Certain embodiments of the present invention relate to a capacitor block which comprises a system for transferring heat away from the capacitors. Each of the capacitors comprises a support protruding from a casing of the capacitor in a direction radially outwards relative to a center axis of the capacitor. Each of the capacitors can be mechanically connected to the capacitor holder via the supports. At least on fluid channel is formed between the capacitors which are arranged in one or more row(s). The fluid medium used in the fluid channel may be a gas or a liquid. 90 % - 100 % of the surface area of the bases of the capacitors can be in direct contact with the fluid channel when using a gas. The fluid channel can be located as close as possible to the hotspots of the bases of the capacitors when using a liquid.

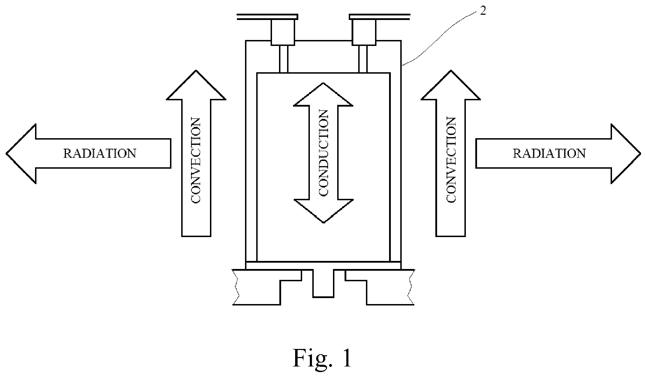

In FIGURE 1 a schematic cross sectional view of an electrolytic capacitor is illustrated. The capacitor 2 is configured to be screwed to a cooling plate. Heat can be transferred away from the capacitor 2 by conduction (about 80 %), convection (about 20 %), and radiation. Heat conduction is most effective through the bottom of the capacitor 2. According to this solution, only a part of the base of the capacitor can be in contact with the cooling plate due to the terminal contact. Additionally, the terminal contact is located in the center of the base of the capacitor 2, i.e. in the hotspot of the base. Hotspot temperature reduction of 7 [°C] - 10 [°C] can double the lifetime of the capacitor.

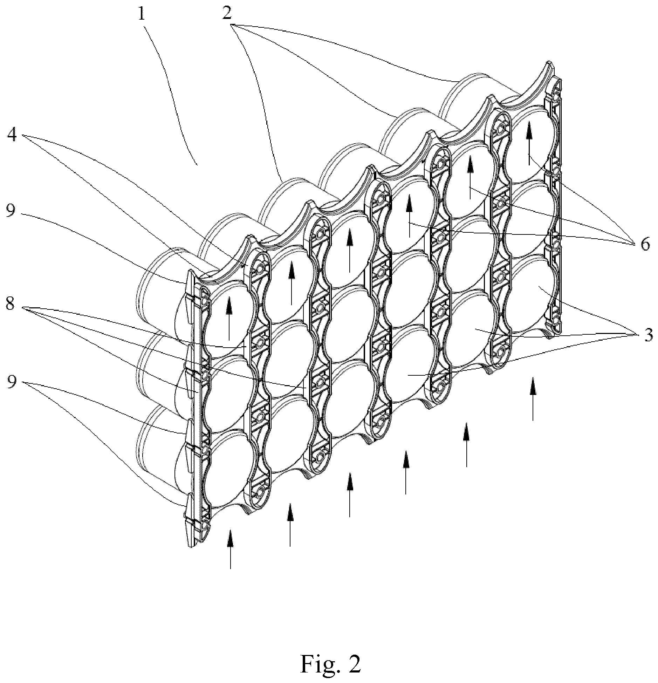

In FIGURE 2 a schematic perspective view of a capacitor block 1 in accordance with at least some embodiments of the present invention is illustrated. The capacitor block 1 comprises eighteen electrolytic capacitors 2 arranged in six rows. Of course, the number of electrolytic capacitors 2 and rows can differ from the given example. Wall elements 8 are connected to spacers 9 in order to form a capacitor holder 4. The spacers 9 are arranged substantially perpendicular to the wall elements 8.

By means of mechanically connecting the electrolytic capacitors 2 and the capacitor holder 4 fluid channels 6 are formed in each row of the capacitor block 1, wherein the bases 3 of the electrolytic capacitors 2 face towards the fluid channels 6 and protrude into the fluid channels 6. Since the capacitor holder 4 is typically mounted on a flat substrate (not shown) or in a capacitor block housing (not shown), a fluid medium can flow through the fluid channels 6 in order to transfer heat from the bases 3 of the electrolytic capacitors 2. Typically, a cooling gas such as air is used and guided through the fluid channels 6. Additionally, the bases 3 are substantially flush and do not comprise mounting screws. Since heat can be conducted away preferably from the bases 3 of the capacitors and 100 % of the surfaces of the bases 3 are in direct contact with the gas, heat transfer can be improved. Electrical insulation of the bases 3, i.e. the bottom plates of the capacitors, from the fluid channels 6, i.e. the cooling circulation, is not required. The fluid channels 6 are orientated substantially parallel to the wall elements 8.

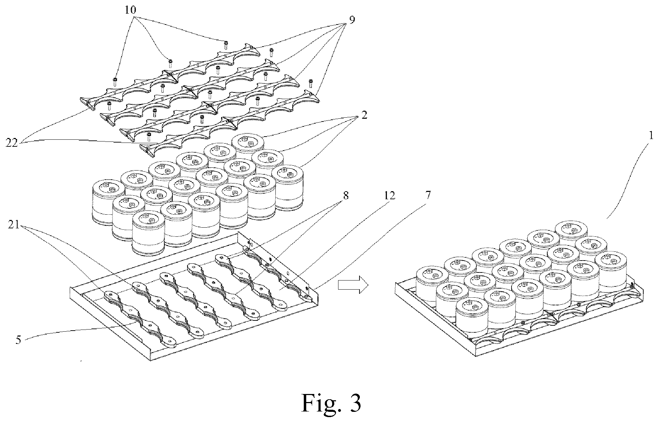

In FIGURE 3 a schematic exploded view of a capacitor block 1 in accordance with at least some embodiments of the present invention is illustrated. Wall elements 8 are arranged parallel to each other and attached to a housing 12 having a substantially flush surface. The wall elements 8 are elongated objects including indentations 21. The indentations 21 of the wall elements 8 are configured to correspond with the outer contour of a portion of the capacitors 2. The indentations 21 of the wall elements 8 are arranged equidistantly. The indentions 21 further each comprise a groove 5 corresponding to a portion of the outer contour of a capacitor 2. The housing 12 is connected to a frame 7.

The capacitors 2 are each placed between two wall elements 8. Spacers 9 can then be fixedly connected to the wall elements 8, for example by means of screws 10, thus forming the capacitor block 1. The spacers 9 are also elongated objects including indentations 22. The indentations 22 of the spacers 9 are also configured to correspond with a portion of the outer contour of the capacitors 2. The spacers 9 are orientated substantially perpendicular to the wall elements 8. Of course, the spacers 9 may also be otherwise fixedly attached to the wall elements, for example by using adhesive. Two adjacent spacers 9 are used to hold one or more capacitor(s) 2 in position. The spacers 9 may be designed such that two adjacent spacers 9 can hold three capacitors 2 in position, for instance. The wall elements 8 and spacers 9 are made of insulating material. Thus, the capacitor holder 4 electrically insulates the capacitors 2 from each other. Examples of materials suitable for the wall elements 8 and spacers 9 are fiber reinforced thermoplastics, polycarbonate, acrylonitrile butadiene styrene (ABS), polyamide, aramid, and polytetrafluorethylene. The materials are chosen on basis of sufficient electrical insulation capacity and sufficient mechanical strength.

The capacitor block 1 can be extended by use of additional wall elements 8, spacers 9, and capacitors 2. For example, three additional wall elements 8 and four additional spacers 9 can form three additional rows for nine additional capacitors 2, if required. It is also possible to arrange the additional wall elements 8 and spacers 9 such that three of six rows each include three additional capacitors 2. Any combination of the aforementioned extensions is also possible due to the modular structure of the capacitor holder 4. Fluid channels 6 can be formed by mounting the additional elements on a substrate.

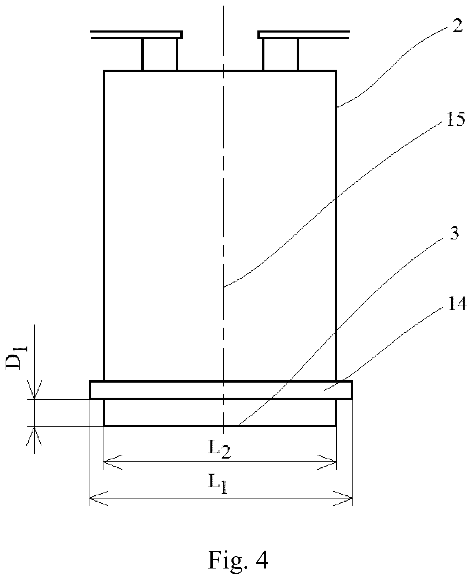

In FIGURE 4 a schematic side view of an electrolytic capacitor 2 of a capacitor block 1 in accordance with at least some embodiments of the present invention is illustrated. The capacitor 2 comprises a support 14 protruding from the cylindrical outer surface of the capacitor 2 in a direction radially outwards. Typically, the support 14 of the capacitor 2 is formed as a ring having an outer diameter L₁ being greater than the diameter L₂ of a base 3 of a capacitor holder 4 (not shown). The support 14 may be, for example, made of metal. The support 14 holds the capacitor 2 in the capacitor holder 4 of the capacitor block 1 (not shown) in position. According to certain embodiments, a sealing ring (not shown) may be additionally used in order to hermetically seal the fluid channel 6 (not shown) of the capacitor block 1. Of course, the outer contour of the support 14 may be shaped otherwise, for example triangularly, rectangularly, hexagonally, octogonally, or annularly.

The support 14 is arranged at a distance D₁ from the base 3 of the capacitor 2. When the capacitor 2 is mechanically connected to the capacitor holder 4, at least a portion of the base 3 of the capacitor 2 can be directly exposed to a gas in the fluid channel 6. According to certain embodiments, 90 % to 100 % of the surface of the base 3 of the capacitor 2 are exposed to a gas in the fluid channel 6. When a liquid as fluid medium is used, electrical insulation is required between the capacitor and the fluid medium. A fluid channel 6 can be arranged such that a cooling liquid flows directly under the hotspot of the base 3 of the capacitor 2.

According to certain embodiments, the support 14 is form as a groove in the casing of the capacitor 2. Such embodiments are considered to be equivalent to the capacitor 2 shown in FIGURE 4. In this case, the spacer 9 includes a portion that is configured to interact with the groove in the casing of the capacitor 2, for instance. The groove in the casing of the capacitor 2 may be, for example, formed circumferentially.

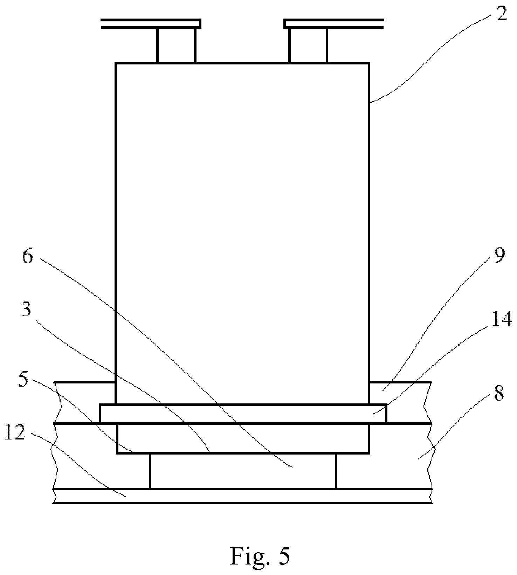

In FIGURE 5 a schematic cross sectional view of a portion of a capacitor block 1 in accordance with at least some embodiments of the present invention is illustrated. Wall elements 8 comprising grooves 5 are mounted on a flush surface of a housing 12. Then the capacitor 2 is inserted between two wall elements 8 such that the base 3 is placed facing the grooves 5 of the wall elements 8. The capacitor 2 is then mechanically connected to the capacitor holder via the support 14 by attaching the spacers 9. A fluid channel 6 is formed between the base 3 of the capacitor 2 and the housing 12.

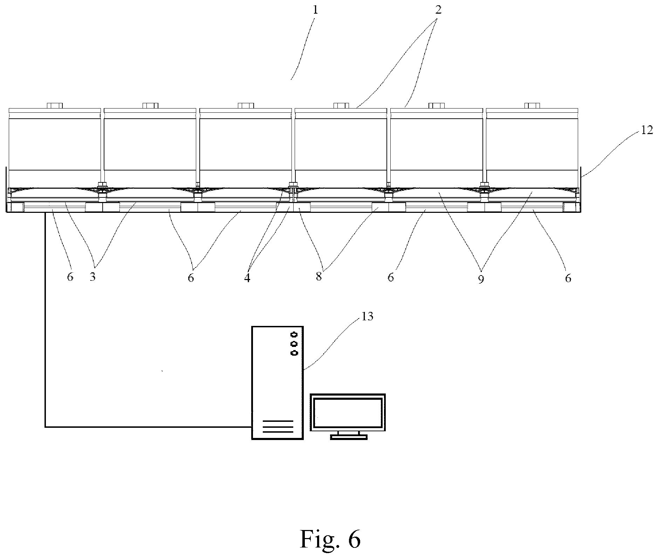

In FIGURE 6 a schematic side view of a capacitor block 1 in accordance with at least some embodiments of the present invention is illustrated. The capacitor block 1 is mounted in a housing 12. Fluid channels 6 are formed between the housing 12, the bases 3 of the electrolytic capacitors 2, the wall elements 8, and the spacers 9. The capacitor holder 4 is configured to mechanically hold the capacitors 2 in such a position that a fluid channel 6 is formed. The fluid channels 6 are separated from each other by means of the wall elements 8 of the capacitor holder 4. The capacitor block 1 comprises means for controlling the mass flow of a cooling gas (not shown), for example a fan. The mass flow of the cooling gas may be controlled by means of a computing device 13 based on measured temperature of the capacitors 2. The mass flow of the cooling gas can be varied by changing the speed of revolution of a fan, for instance. The gas can enter the respective fluid channel 6 through an opening and exit the fluid channel 6 through another opening in a direction downstream. The cross sectional area of each fluid channel is relatively small, i.e. the cooling gas can flow through the fluid channels with relatively high velocity without consumption of unnecessary large amounts of energy when creating the fluid flow. The local velocity of the gas used may vary, for example, between 0 [m/s] and 15 [m/s] in the fluid channels 6. The temperature of the cooling gas can be further lower than the ambient temperature according to certain embodiments. The temperature of the cooling gas may be, for example, in the range between 0 [°C] and 20 [°C].

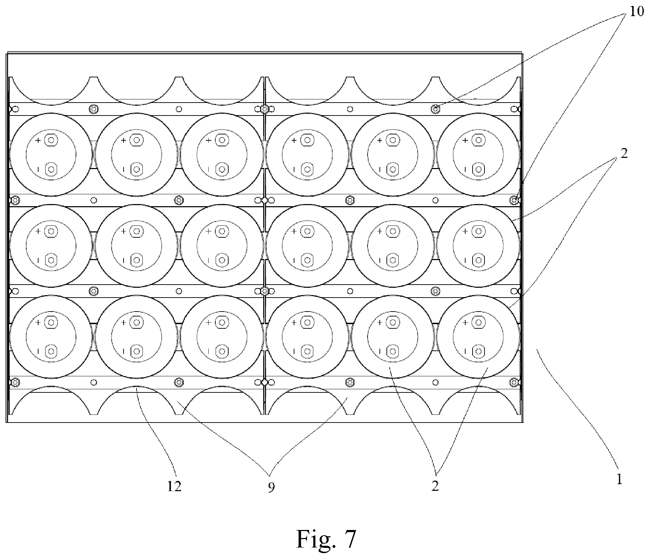

In FIGURE 7 a schematic top view of a capacitor block 1 in accordance with at least some embodiments of the present invention is illustrated. The capacitors 2 are mounted in a housing 12 which can be easily installed in another system. The number of parts can be reduced due to an X-arrangement of the screws 10. In other words, only every second boring of the wall elements 8 and the spacers 9 is used for attaching the spacers 9 to the wall elements 8. The casing of the capacitor is typically in the same electrical potential as the negative pole of the capacitor. Therefore, only capacitors 2 having the same potential can be placed close to each other. Capacitors 2 having about the same potential are arranged in a row which is perpendicular to the fluid channels 6. Capacitors 2 having different potential are arranged in different rows which are perpendicular to the fluid channels 6. The distance between these rows is greater than the distance between adjacent capacitors 2 in each row.

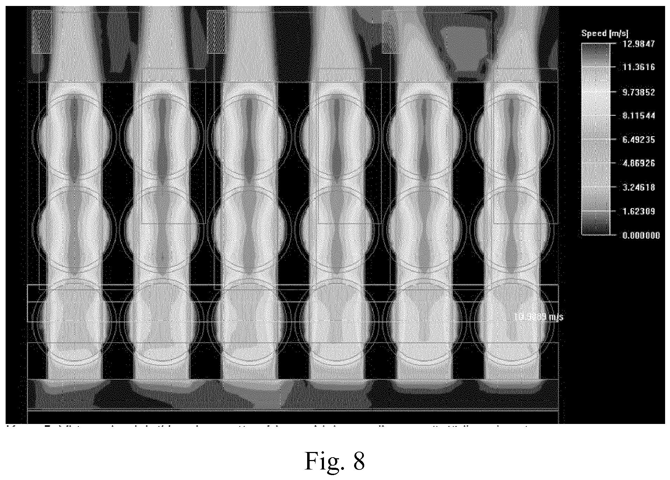

In FIGURE 8 an image of a computerized simulation of a fluid flow in fluid channels 6 of a capacitor block 1 in accordance with at least some embodiments of the present invention is illustrated. By using computer aided fluid design programs (CFD) simulations of local fluid flows in the fluid channels 6 can be performed. It is also possible to simulate local fluid flows in the region of the bases 3 of the capacitors 2. The dimensions and contour of the fluid channels 6 can be e.g. optimized based on parameters such as local velocity of the fluid flow or local pressure in the fluid channels 6. Heat transfer may take place, for example, at local fluid velocities in the region between 0 [m/s] and about 13 [m/s]. According to certain embodiments, local fluid velocities of about 5 [m/s] in the region of the bases 3 are required to efficiently transfer heat away from the bases 3 of the capacitors 2.

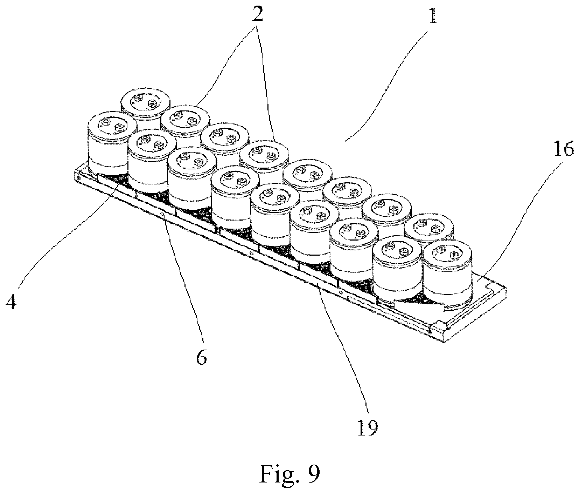

In FIGURE 9 a schematic perspective view of a capacitor block 1 in accordance with at least some embodiments of the present invention is illustrated. Electrolytic capacitors 2 are mechanically connected to a capacitor holder 4. The capacitors 2 are held in position by means of the supports 14 of the capacitors 2 mechanically connected to the capacitor holder 4. The capacitors 2 are arranged with their bases 3 on the surface of an insulator 16. The insulator 16 electrically insulates the capacitors 2 from a cooling system 19 comprising at least one fluid channel 6. Alternatively, the capacitors are held in position by means of the supports 14 of the capacitors 2 such that a small gap is arranged between the bases 3 of the capacitors and the insulator 16.

The bases 3 are electrically insulated from the cooling system 19, since the casings of the capacitors 2 are in electrical contact with the respective cathodes of the capacitors 2. The insulator 16 has high thermal conductivity in order to allow maximum heat transfer. The fluid channels 6 are orientated substantially perpendicular to a central axis 15 of each capacitor 2. A liquid such as water may be, for example, used as fluid medium. The local velocity of the liquid in the fluid channel may be, for example, in the range between 0 [m/s] and 15 [m/s]. According to certain embodiments, the temperature of the liquid may be further lower than the ambient temperature in order to effectively conduct heat away from the bases 3 of the capacitors 2. The temperature of the liquid may be, for example, in the range between 1 [°C] and 20 [°C].

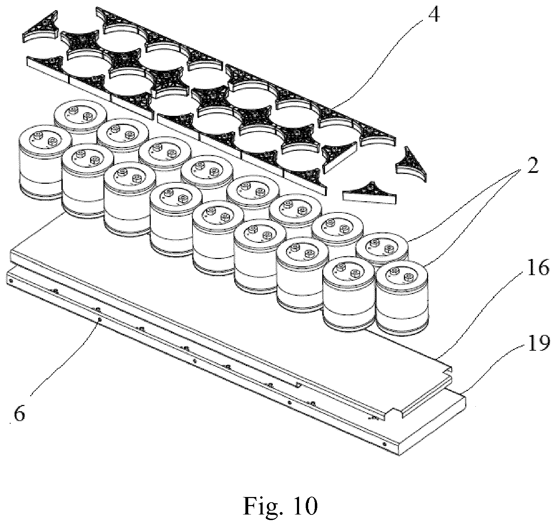

In FIGURE 10 a schematic exploded view of a capacitor block 1 in accordance with at least some embodiments of the present invention is illustrated. The capacitors 2 are typically fixed by means of mechanical connection of the capacitors 2 and the capacitor holder 4. The capacitor holder 4 is made of an insulating material such as plastic material. The capacitor holder 4 may be, for example, attached to the insulator 16 and/or thermal cooling element 19 by means of screws. Fixedly attaching the capacitor holder 4 to the insulator 16 may also take place by using adhesive. In this case, the insulator 16 is typically fixedly attached to the thermal cooling element 19 by means of adhesive. The capacitor holder 4 may be formed as one piece or may comprise more than one piece. Typically the adhesive material used is an electrically insulating material. The electrical conductivity of the insulating material may be, for example, of the same order as the electrical conductivity of the insulating material of the insulator 16 and/or the capacitor holder 4. Materials suitable for the insulator 16 may be, for example, glass, porcelain, or composite polymer materials. According to certain embodiments, also the capacitors 2 may be attached to the insulator 16 by means of adhesive.

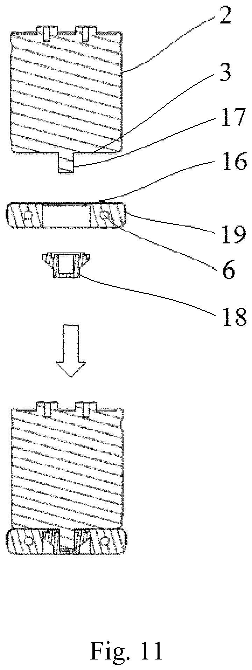

In FIGURE 11 a schematic cross sectional view of a mounting sequence of a capacitor 2 and a common cooling system of a capacitor 2 is illustrated. A capacitor 2 comprising a mounting screw 17 is attached to the cooling system 19 via a plastic nut 18. The cooling system comprises cooling elements 19 which surround two fluid channels 6. Additionally, an insulator 16 is arranged on top of the cooling system in order to electrically insulate the fluid channels 6 from the capacitor 2. The plastic nut 18 electrically insulates the mounting screw 17 guided through an opening in the insulator 16. The fluid channels 6 are orientated essentially perpendicular to the central axis 15 of the capacitor 2 and are arranged in a direction radially outwards of the center axis 15 of the capacitor. In other words, common systems provide fluid channels 6 which are arranged at a distance from the hotspot of the base 3 of the capacitor 2.

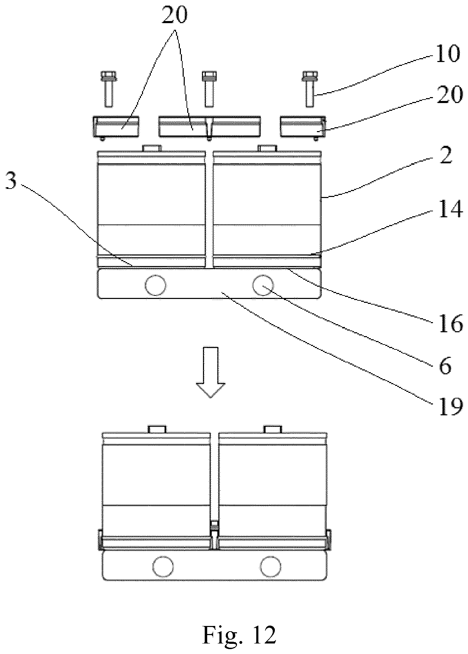

In FIGURE 12 a schematic side view of a mounting sequence of capacitors 2 and a cooling system 19 of a capacitor block 1 in accordance with at least some embodiments of the present invention is illustrated. The capacitors 2 each comprise a base 3 which is substantially flush and is arranged on top of an insulator 16. The capacitors 2 further each comprise a support 14 protruding in a direction radially outwards from the casing of the respective capacitor 2. The insulator 16 is fixedly attached to a cooling system 19. The capacitors 2 are attached to the insulator and the cooling system 19 by means of fixators 20 which hold the capacitors 2 in position by mechanical connection with the supports 14. The fixators 20 are made of insulating material such as plastic material. The electrical conductivity of the fixators 20 may be, for example, of the same order as the electrical conductivity of the insulating material of the insulator 16. The fixators 20 are attached to the cooling system 19 using screws 10, for instance. Further, the fixators 20 may include a groove corresponding to the support of the respective capacitor 2.

At least one fluid channel 6 is arranged under the respective base 3 of a capacitor 2. In other words, the fluid channels 6 are arranged as close as possible to the hotspot of the base 3 of the capacitor 2. The fluid channels 6 are embedded in the cooling element 19. Since the capacitors 2 do not comprise mounting screws, the fluid channels 6 can be arranged directly under the hotspots of the capacitors 2, i.e. in the centermost region of the bottom plate. In other words, the fluid channels 6 are as close as possible to the points of the bases 3 having the greatest temperature.

### INDUSTRIAL APPLICABILITY

At least some embodiments of the present invention find industrial application in power conversion apparatuses or industrial drives.

### REFERENCE SIGNS LIST

- 1: capacitor block
- 2: capacitor
- 3: base
- 4: capacitor holder
- 5: groove
- 6: fluid channel
- 7: frame
- 8: wall element
- 9: spacer
- 10: screw
- 11: fan
- 12: housing
- 13: computing device
- 14: support
- 15: central axis
- 16: insulator
- 17: mounting screw
- 18: nut
- 19: cooling element
- 20: fixator
- 21: indentation of wall element
- 22: indention of spacer
- L₁: diameter of mounting ring
- L₂: diameter of base
- D₁: distance between base and support

### CITATION LIST

### Patent Literature

US 5,021,927
EP 0780855 A1
US 2004/0130855 A1
US 2011/0032674 A1

Non Patent Literature

## Claims

1. A capacitor block (1) comprising:
- a plurality of electrolytic capacitors (2) arranged in at least one row, each capacitor (2) comprising a support (14) protruding from a casing of the capacitor (2) in a direction radially outwards relative to a center axis (15) of the capacitor (2),
- a capacitor holder (4),
- wherein each capacitor (2) is mechanically connected to the capacitor holder (4) via the support (14), and
- wherein between at least two capacitors (2) a fluid channel (6) is arranged in each row
wherein the capacitor holder (4) comprises wall elements (8) and spacers (9) which are attached to the wall elements (8), **characterized in that** said wall elements (8) and spacers (9) are arranged such as to form a part of the fluid channel (6).

2. The capacitor block (1) according to claim 1, wherein the support (14) is formed as a ring.

3. The capacitor block (1) according to claim 1 or 2, wherein the support (14) is arranged at a distance (D₁) from a base (3) of the capacitor (2),

4. The capacitor block (1) according to any one of claims 1 to 3, wherein the fluid channel (6) is formed by a surface of an object, the capacitor holder (4) and the electrolytic capacitors (2).

5. The capacitor block (1) according to claim 1, wherein the fluid channel (6) is formed between a surface of an object, two spacers (9) arranged adjacent to each other, the bases (3) of at least two capacitors (2), and two wall elements (8) which are separated from each other.

6. The capacitor block (1) according to any one of claims 1 to 5, wherein the capacitor block (1) comprises means for controlling the mass flow of a fluid medium.

7. The capacitor block (1) according to claim 6, wherein the fluid medium comprises a gas or a liquid.

8. The capacitor block (1) according to any one of claims 1 to 2, wherein the fluid channel (6) is electrically insulated from the capacitors (2) by means of an insulator (16) between the fluid channel (6) and the capacitor holder (4).

9. The capacitor block (1) according to any one of claims 1 to 8, wherein the fluid channel (6) is orientated substantially perpendicular to a central axis (15) of each respective capacitor (2).

10. A method for transferring heat from capacitors (2) of a capacitor block (1), the method comprising:
- providing each of the capacitors (2) with a support (14) protruding from a casing of the capacitor (2) in a direction radially outwards relative to a center axis (15) of the capacitor (2),
- mechanically connecting the support (14) and a capacitor holder (4), wherein the capacitor holder (4) is formed by attaching spacers (9) to wall elements (8), wherein said wall elements (8) and spacers (9) are arranged such as to form a part of at least one fluid channel (6),
- arranging the at least one fluid channel (6) in connection with bases (3) of at least two capacitors (2) of the capacitor block (1),
- providing a moving fluid medium in the fluid channel (6), and
- transferring heat away from the base (3) of the capacitor (2) by means of the fluid medium.

11. The method according to claim 10 , the method further comprising:
- controlling the mass flow of the fluid medium.

12. The method according to any of claims 10 or 11, wherein a gas is used as fluid medium, which is directly in contact with the base (3) of the capacitor (2) when flowing in a direction downstream.

13. The method according to any of claims 10 or 11, wherein a liquid is used as fluid medium, which is electrically insulated from the capacitor (2) when flowing in a direction downstream.

14. The method according to any one of the claims 10 to 13, wherein the temperature of the fluid medium is lower than the ambient temperature of the capacitor block (1).

## Patentansprüche

1. Kondensatorblock (1), umfassend:
- eine Vielzahl von elektrolytischen Kondensatoren (2), die in mindestens einer Reihe angeordnet sind, wobei jeder Kondensator (2) eine Auflage (14) umfasst, die von einem Gehäuse des Kondensators (2) in eine Richtung radial nach außen mit Bezug auf eine zentrale Achse (15) des Kondensators (2) vorsteht,
- einen Kondensatorhalter (4),
- wobei jeder Kondensator (2) mechanisch mit dem Kondensatorhalter (4) über die Auflage (14) verbunden ist, und
- wobei zwischen mindestens zwei Kondensatoren (2) ein Fluidkanal (6) in jeder Reihe angeordnet ist,
wobei der Kondensatorhalter (4) Wandelemente (8) und Abstandhalter (9) umfasst, die an die Wandelemente (8) befestigt sind, **dadurch gekennzeichnet, dass**
die Wandelemente (8) und Abstandhalter (9) derart angeordnet sind, dass sie einen Teil des Fluidkanals (6) bilden.

2. Kondensatorblock (1) nach Anspruch 1, wobei die Auflage (14) als ein Ring gebildet ist.

3. Kondensatorblock (1) nach Anspruch 1 oder 2, wobei die Auflage (14) in einem Abstand (D₁) von einer Basis (3) des Kondensators (2) angeordnet ist.

4. Kondensatorblock (1) nach einem der Ansprüche 1 bis 3, wobei der Fluidkanal (6) durch eine Fläche eines Objekts, des Kondensatorhalters (4) und der elektrolytischen Kondensatoren (2) gebildet ist.

5. Kondensatorblock (1) nach Anspruch 1, wobei der Fluidkanal (6) zwischen einer Fläche eines Objekts, zwei Abstandhaltern (9), die benachbart zueinander angeordnet sind, den Basen (3) von mindestens zwei Kondensatoren (2) und zwei Wandelementen (8) gebildet ist, die voneinander getrennt sind.

6. Kondensatorblock (1) nach einem der Ansprüche 1 bis 5, wobei der Kondensatorblock (1) Mittel zum Steuern des Massenstroms eines Fluidmediums umfasst.

7. Kondensatorblock (1) nach Anspruch 6, wobei das Fluidmedium ein Gas oder eine Flüssigkeit umfasst.

8. Kondensatorblock (1) nach einem der Ansprüche 1 bis 2, wobei der Fluidkanal (6) von den Kondensatoren (2) mit Hilfe eines Isolators (16) zwischen dem Fluidkanal (6) und dem Kondensatorhalter (4) elektrisch isoliert ist.

9. Kondensatorblock (1) nach einem der Ansprüche 1 bis 8, wobei der Fluidkanal (6) im Wesentlichen senkrecht zu einer zentralen Achse (15) jedes entsprechenden Kondensators (2) ausgerichtet ist.

10. Verfahren zur Wärmeableitung aus Kondensatoren (2) eines Kondensatorblocks (1), wobei das Verfahren Folgendes umfasst:
- Bereitstellen jedes der Kondensatoren (2) mit einer Auflage (14), die von einem Gehäuse des Kondensators (2) in eine Richtung radial nach außen mit Bezug auf eine zentrale Achse (15) des Kondensators (2) vorsteht,
- mechanisches Verbinden der Auflage (14) und eines Kondensatorhalters (4), wobei der Kondensatorhalter (4) durch Befestigen von Abstandhaltern (9) an Wandelemente (8) gebildet ist, wobei die Wandelemente (8) und Abstandhalter (9) derart angeordnet sind, dass sie einen Teil mindestens eines Fluidkanals (6) bilden,
- Anordnen des mindestens einen Fluidkanals (6) in Verbindung mit Basen (3) von mindestens zwei Kondensatoren (2) des Kondensatorblocks (1),
- Bereitstellen eines sich bewegenden Fluidmediums im Fluidkanal (6), und
- Wärmeableiten weg von der Basis (3) des Kondensators (2) mit Hilfe des Fluidmediums.

11. Verfahren nach Anspruch 10, wobei das Verfahren weiter Folgendes umfasst:
- Steuern des Massenstroms des Fluidmediums.

12. Verfahren nach einem der Ansprüche 10 oder 11, wobei ein Gas als Fluidmedium verwendet wird, das direkt in Kontakt mit der Basis (3) des Kondensators (2) ist, wenn es in eine Richtung stromabwärts fließt.

13. Verfahren nach einem der Ansprüche 10 oder 11, wobei eine Flüssigkeit als Fluidmedium verwendet wird, die elektrisch vom Kondensator (2) isoliert ist, wenn sie in eine Richtung stromabwärts fließt.

14. Verfahren nach einem der Ansprüche 10 bis 13, wobei die Temperatur des Fluidmediums niedriger als die Umgebungstemperatur des Kondensatorblocks (1) ist.

## Revendications

1. Bloc condensateur (1) comprenant :
- une pluralité de condensateurs électrolytiques (2) agencés sur au moins une rangée, chaque condensateur (2) comprenant un support (14) faisant saillie depuis un carter du condensateur (2) dans une direction radialement vers l'extérieur par rapport à un axe central (15) du condensateur (2),
- un porte-condensateur (4),
- dans lequel chaque condensateur (2) est mécaniquement connecté au porte-condensateur (4) via le support (14), et
- dans lequel entre au moins deux condensateurs (2) est agencé un canal de fluide (6) dans chaque rangée
dans lequel le porte-condensateur (4) comprend des éléments de paroi (8) et des entretoises (9) qui sont fixés aux éléments de paroi (8), **caractérisé en ce que** lesdits éléments de paroi (8) et entretoises (9) sont formés de manière à former une partie du canal de fluide (6).

2. Bloc condensateur (1) selon la revendication 1, dans lequel le support (14) est formé comme un anneau.

3. Bloc condensateur (1) selon la revendication 1 ou 2, dans lequel le support (14) est agencé à une distance (D₁) d'une base (3) du condensateur (2).

4. Bloc condensateur (1) selon l'une quelconque des revendications 1 à 3, dans lequel le canal de fluide (6) est formé par une surface d'un objet, le porte-condensateur (4) et les condensateurs électrolytiques (2).

5. Bloc condensateur (1) selon la revendication 1, dans lequel le canal de fluide (6) est formé entre une surface d'un objet, deux entretoises (9) agencées de manière adjacente l'une à l'autre, les bases (3) d'au moins deux condensateurs (2) et deux éléments de paroi (8) qui sont séparés l'un de l'autre.

6. Bloc condensateur (1) selon l'une quelconque des revendications 1 à 5, dans lequel le bloc condensateur (1) comprend un moyen pour commander le débit massique d'un milieu fluide.

7. Bloc condensateur (1) selon la revendication 6, dans lequel le milieu fluide comprend un gaz ou un liquide.

8. Bloc condensateur (1) selon l'une quelconque des revendications 1 à 2, dans lequel le canal de fluide (6) est électriquement isolé des condensateurs (2) à l'aide d'un isolant (16) entre le canal de fluide (6) et le porte-condensateur (4).

9. Bloc condensateur (1) selon l'une quelconque des revendications 1 à 8, dans lequel le canal de fluide (6) est orienté de manière sensiblement perpendiculaire à un axe central (15) de chaque condensateur (2) respectif.

10. Procédé pour transférer de la chaleur depuis des condensateurs (2) d'un bloc condensateur (1), le procédé comprenant :
- la fourniture de chacun des condensateurs (2) avec un support (14) faisant saillie depuis un carter du condensateur (2) dans une direction radialement vers l'extérieur par rapport à un axe central (15) du condensateur (2),
- la connexion mécanique du support (14) et d'un porte-condensateur (4), dans lequel le porte-condensateur (4) est formé par la fixation d'entretoises (9) à des éléments de paroi (8), dans lequel lesdits éléments de paroi (8) et entretoises (9) sont agencés de manière à former une partie d'au moins un canal de fluide (6),
- l'agencement de l'au moins un canal de fluide (6) en connexion avec des bases (3) d'au moins deux condensateurs (2) du bloc condensateur (1),
- la fourniture d'un milieu fluide mobile dans le canal de fluide (6), et
- le transfert de chaleur loin de la base (3) du condensateur (2) à l'aide du milieu fluide.

11. Procédé selon la revendication 10, le procédé comprenant en outre :
- la commande du débit massique du milieu fluide.

12. Procédé selon l'une quelconque des revendications 10 ou 11, dans lequel un gaz est utilisé comme milieu fluide, qui est directement en contact avec la base (3) du condensateur (2) lors d'un écoulement dans une direction vers l'aval.

13. Procédé selon l'une quelconque des revendications 10 ou 11, dans lequel un liquide est utilisé comme milieu fluide, qui est électriquement isolé du condensateur (2) lors d'un écoulement dans une direction vers l'aval.

14. Procédé selon l'une quelconque des revendications 10 à 13, dans lequel la température du milieu fluide est inférieure à la température ambiante du bloc condensateur (1).
